# EUROPEAN PATENT SPECIFICATION

(11) **EP 3 046 647 B1**
(45) Date of publication and mention of the grant of the patent: **19.06.2019**
(21) Application number: 14789911.6
(22) Date of filing: 17.09.2014
(51) Int. Cl.: B01D 39/16, B01D 39/20, B01D 17/04, B01D 17/00

(54) **HIGH FLOW COALESCER**
KOALESZER MIT HOHEM DURCHFLUSS
COALESCEUR À HAUT RENDEMENT

(30) Priority: 17.09.2013 US 201361878946 P
(43) Date of publication of application: 27.07.2016
(73) Proprietor: Parker-Hannifin Corp, Cleveland, OH 44124 (US)
(72) Inventor: PERKINS, Carl Robert, Colorado Springs, Colorado 80980 (US); HAWKINS, David Stanley, Colorado Springs, Colorado 80920 (US)
(74) Representative: Orr, Robert
(86) International application number: PCT/US2014/056167
(87) International publication number: WO 2015/042194

(56) References cited:
- EP-A1- 1 201 286
- WO-A1-98/14257
- US-A- 4 058 463

## Description

### Field of Invention

The present invention relates generally to filtration, and more particularly to a high flow coalescer for use with hydrocarbon fuels.

### Background

Coalescer cartridges are employed as the first stage in filter/separator vessels for hydrocarbon fluids. Coalescers filter-out particulate contaminants and coalesce (combine) highly dispersed, emulsified water particles into larger water drops.

Tiny droplets of water in the fuel contact and adhere to strands of a filter (for example, fiberglass). Flow pushes the droplets along the strand until they reach an intersection of strands where they combine with other droplets (coalesce) into large drops.

These large drops are then carried to the outside surface of the cartridge in a conventional inside-out flow arrangement, although outside-in flow arrangements are also possible. Having a higher specific gravity than the hydrocarbon fluid, the water droplets release and settle to the bottom of the vessel containing the filtration media. The larger the drops, the faster and more efficiently they fall out.

The largest single application of a fuel coalescer is the filtration of aviation jet fuel, however they are also used with other types of fuels, process streams in refineries and petrochemical plants, and condensate streams where natural gas is produced.

Other liquids can be separated if they are immiscible, the specific gravities differ, and high concentrations of surface active agents are not present. As a rule of thumb, if a sample of the mixture readily separates in an hour or two, a coalescer can probably be used. If the mixture hasn't separated after 24 hours, coalescing probably will not work.

Document EP 1 201 286 A1 discloses a coalescer cartridge comprising a multilayered pleated section, which filters particulates and initiates/promotes coalescence of water, and a wrap multilayer filter media , which enhances the development of large water bubbles, thereby separating water from a water/fuel mixture.

In conventional coalescers, combination fiberglass and pleated media coalescers remove particles primarily in the high surface area pleated core. They typically contain 6-8 layers of pleated media inside a cylinder of molded fiberglass laminations to provide an extended surface area for particulate filtration. Pleat corrugation and separation materials are used to keep pleats open for full utilization. The outer wrap layers are used for water separation and growth of water droplets. Conventional coalescers can achieve flow rates of about 1.46 It /min cm² (2.5 gallons per minute per square inch). In a 3785.4 It/ min (1000gpm) system, this requires a 2,580.64 cm² (400 square-inch) coalescer.

### Summary of Invention

Exemplary embodiments provide for a significantly higher flow rate-about 3.87 It/min cm² (6.6 gallons per minute (gpm) per square inch). In a 3785.4 It/min (1000gpm) system, the coalescer requires less than about 967.74 cm² (150 square inches), resulting in a filter about one-half the size of conventional filters. The reduced size and weight of the coalescer (and the associated housing) creates clear advantages, especially in the aerospace industry.

To achieve these higher flow rates, exemplary coalescers include a first layer of pleated filter media used to capture particulates and a second co-pleated layer of pleated filter media to separate water. The wrap layers can then be dedicated to water droplet growth in order to speed flow rates. Exemplary wrap layers may include about three layers of needle polyester wrap with large fiber diameters.

According to one aspect of the invention, a coalescer cartridge for separating a first fluid from a second fluid is described in claim 1.

The pleated media portion includes two layers of co-pleated material.

The pleated filter media portion includes a solids retention layer configured to filter particulate matter from the first and second fluid.

Optionally, the pleated filter media portion includes a cellulose or glass filter media.

The fluid separation layer includes an open structure relative to the dense structure of the solids retention layer.

Optionally, the wrap filter media portion includes first, second, and third droplet growth layers.

Optionally, a first droplet growth layer is upstream of a second droplet growth layer and includes a fine distribution of fibers relative to the second droplet growth layer having a coarse distribution of fibers relative to the first droplet growth layer.

Optionally, the wrap filter media portion includes a needle polyester wrap.

The wrap filter media portion includes fibers having a diameter greater than a diameter of fibers in the pleated filter media portion.

Optionally, the coalescer cartridge further includes a first endcap having a fluid inlet in fluid communication with a central chamber of the pleated filter media portion defined by an inner layer of filter media.

Optionally, the coalescer cartridge further includes a second endcap closing an end of the central chamber of the pleated filter media portion defined by an inner layer of filter media.

Optionally, the first endcap includes an internal gasket for sealing against a fluid port when installed in a filtration assembly.

Optionally, the first fluid is water.

Optionally, the second fluid is jet fuel.

Optionally, the second fluid is diesel fuel.

According to another aspect of the invention, a method of filtering a first fluid from a second fluid of a fluid mixture with a coalescer according to the present invention is described in claim 14 and includes the steps of filtering particles from the primary fluid by passing a fluid mixture through a pleated filter media portion of the coalescer; separating a secondary fluid from the primary fluid by passing the fluid mixture through a pleated fluid separation layer of the pleated filter media portion of the coalescer, thereby forming relatively small droplets of the secondary fluid; and growing the relatively small droplets of the secondary fluid into relatively large droplets of the secondary fluid by passing the mixture through a wrap filter media portion downstream of the pleated media portion and thereby coalescing the relatively small droplets into relatively large droplets.

Optionally, the method further includes the step of releasing and settling the relatively large droplets into a vessel containing the filter media.

The foregoing and other features of the invention are hereinafter described in greater detail with reference to the accompanying drawings.

### Brief Description of the Drawings

FIG. 1 is a perspective view of an exemplary coalescer cartridge wherein successive layers of filter media are partially broken away to illustrate the interior structure of the cartridge;
FIG. 2 is a cross-sectional schematic view of the exemplary coalescer cartridge;
FIG. 3 is a side elevation view of an exemplary coalescer cartridge wherein successive layers of filter media are partially broken away to illustrate the interior structure of the cartridge;
FIG. 4 is a partial cross-sectional view of a pleated media portion showing exemplary pleated media portion layers; and
FIG. 5 is a partial cross-sectional view of a wrap media portion showing exemplary wrap media portion layers.

### Detailed Description

As mentioned, coalescers have two primary functions, solids retention and water removal. Conventional coalescers include a pleated section and a wrap section. Conventionally, the primary purpose of the pleated section was for the removal of solid particulate, which was accomplished by a thin dense microglass or cellulose media for solids retention. The wrapped section, downstream of the pleated section, was used solely for the separation of fuel from water to begin the coalescing process and growth of water droplets. The maximum flow rate achieved by a coalescer is driven by the total surface area of the pleated section. Maximum water removal efficiency is achieved via matching the right glass fiber diameters and number of layers of same for separation and coalescing/growth of water droplets. Another important factor for completeness of coalescence is dwell time of the fuel in the fiber matrix. Limitations of flow and effective coalescence are directly related to surface area of the pleated section and dwell time in the fiber matrix.

Exemplary coalescers have much higher flow rates than these conventional coalescers and include a co-pleated, more open fiber matrix (than the primary filtration media) water-separation media that is positioned downstream of the primary filtration media. The primary function of this water-separation media is to begin the water coalescing process by separating the water from the fuel. Therefore, in exemplary coalescers, the pleated filtration media is both an efficient solids retainer and a water separator. This co-pleated material is a far less dense (than conventional pleated section) filtration material that begins the coalescing process by separation of the primary phase, (fuel) from the secondary phase, (free water), before the flow reaches the wrap section. Exemplary media include the use of a very lofty air filtration media (e.g., an open-structured cellulose or glass). Because the pleated section has 5-10x the surface area of the wrap section, this secondary coalescing pleated material is very effective at beginning the water separation.

As previously mentioned, conventionally, the wrap section alone performed the separation and growth process. The advantage of exemplary configurations is a significant increase in the amount of water droplet growth media thereby greatly enhancing the quality of the coalescence even in the presence of problematic low interfacial tension fuel. The wrap section now has one primary role and that is to achieve droplet growth, where previously, in conventional coalescer designs, it was tasked with separation and growth of water droplets.

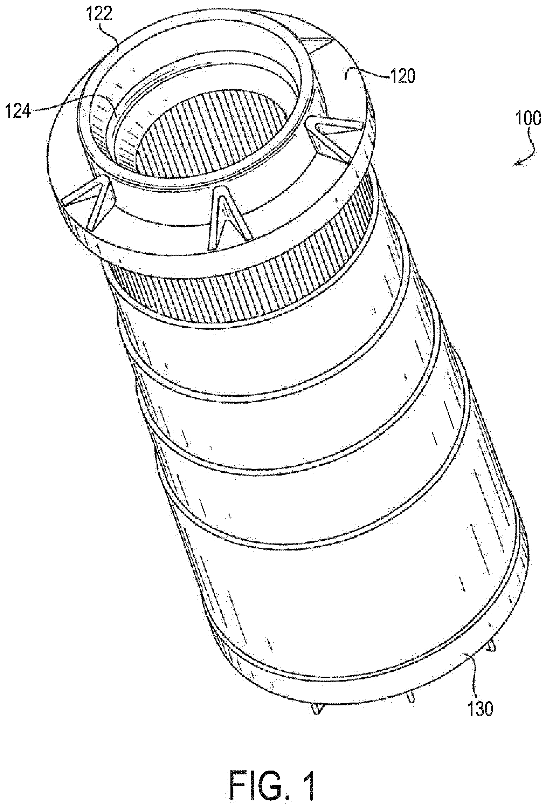

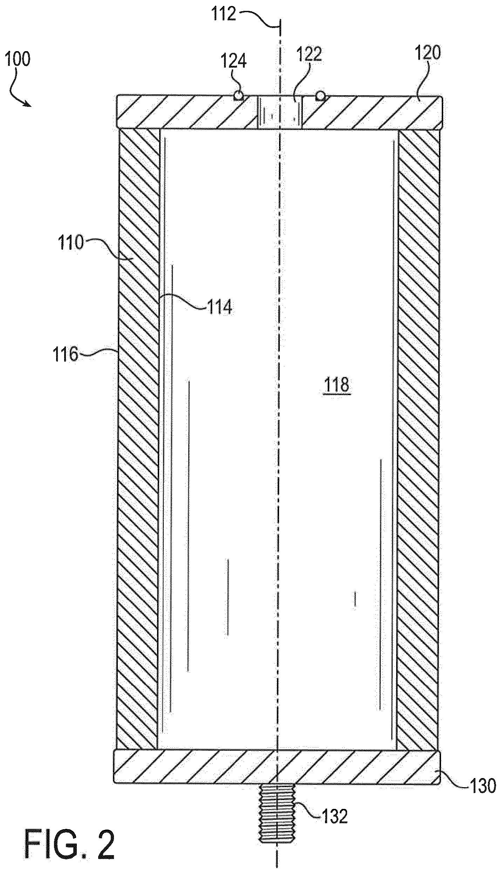

Referring first to FIGs. 1 and 2, shown is an exemplary coalescer cartridge 100. The coalescer cartridge 100 includes a generally cylindrical coalescer media 110 that extends along a longitudinal axis 112 and has an inner diameter 114 and an outer diameter 116. The inner diameter defines a central chamber 118 into which fuel flows before passing through the media 110. The media 110 is sealingly secured (for example, by adhesive) to and extends from a first end cap 120 to a second end cap 130 to which the media 110 is also sealingly secured.

Exemplary cartridges may be any appropriate size, but are preferably about 14.7 cm² (6 inches) in diameter and range from approximately 35.6 cm (14 inches) long (27.9 cm (11 inches) of media) to approximately 142 cm (56 inches) long (134.6 cm (53 inches) of media) resulting in outer surface areas of about 419.5 - 2,064.5 cm² (65-320 square inches).

The first end cap 120 may be generally ring-shaped and include a port 122 opening onto the central chamber 118 of the media. The port 122 may be configured to attach to a filtration assembly (filter head) of the vehicle or other assembly for which the coalescer cartridge is made to be installed in. The port may include one or more seal members 124 such as a gasket for sealing the cartridge 100 to the filtration assembly. Optionally, the end cap 120 may include internal or external threads (for example, in the port 122) for attaching the cartridge to the filtration assembly, although other attachment may be used.

The second end cap 130 may close off the central chamber 118 of the media, and may be generally disk-shaped. The end cap 130 may include a fixing element 132 to fix the cartridge 100 to a structure, for example by a spider bolt.

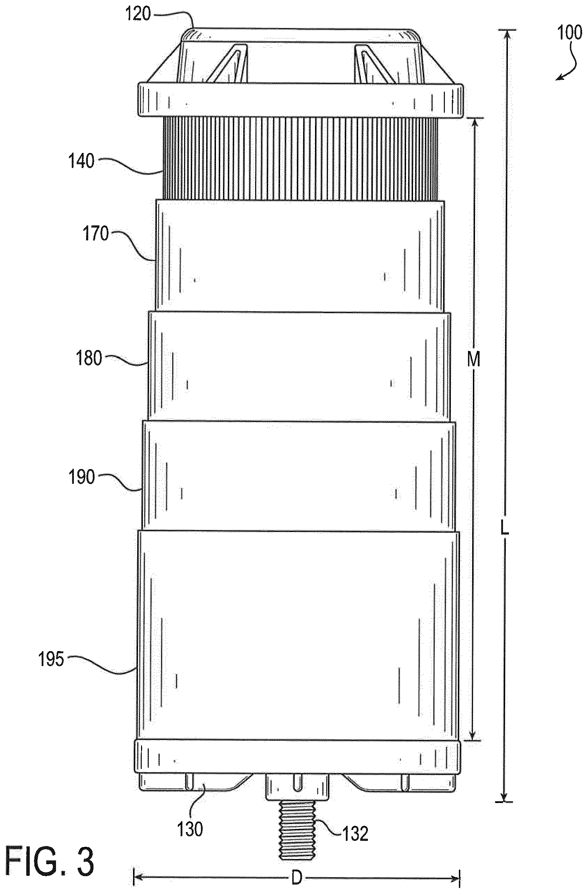

Referring now to FIG. 3, the coalescer cartridge 100 is shown with layers of the media 110 stripped away to show more detail. Shown as an inner most section in FIG. 3 is a pleated filter media portion 140 (pleated portion). Radially outward of the pleated portion 140 are, successively, a perforated center tube 170, a wrap filter media portion 180, polyester batting 190, and an outer sock 195.

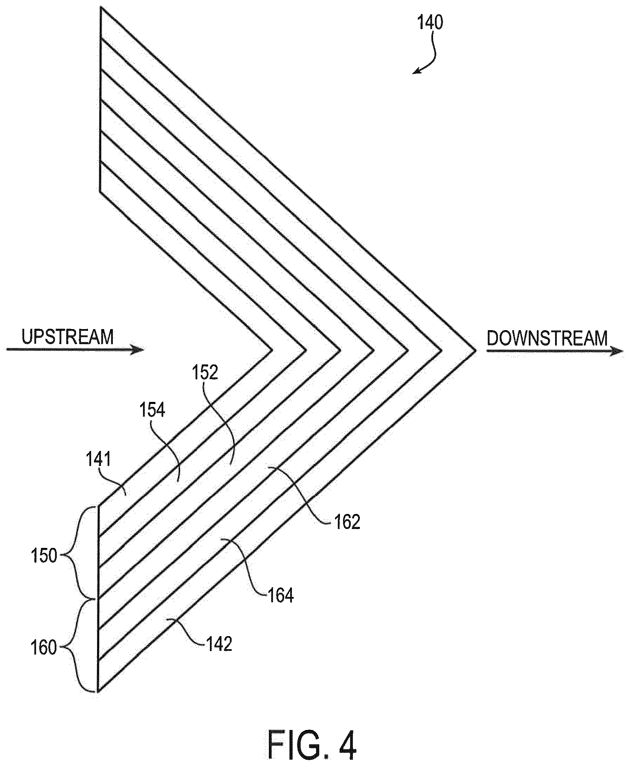

The pleated portion 140 is shown in cross-section in FIG. 4, revealing the layers of the pleated portion 140. The pleated portion may be either normally pleated or M-pleated, but is preferably normally pleated as shown. Although the number of pleats in the pleated portion 140 may be any amount, depending on the application, exemplary portions 140 include approximately 60 pleats. Similarly, pleat height may vary depending on the application, but exemplary height is preferably about 2.5 cm (1 inch), and is more preferably about 2.4 cm (0.9375 Inches).

Optionally, the pleated portion 140 includes an epoxy coated screen mesh 141 as a radially innermost layer. This screen 141 may provide very coarse filtering but mainly acts to provide structural rigidity to the media 110. Additionally or alternatively, the pleated portion 140 may include an epoxy coated screen 142 as a radially outermost layer. Again, this screen 142 mainly provides structural integrity to the media 110.

The pleated portion 140 includes a solids-retention portion 150 and a water separation portion 160 downstream (in this case, radially outward) of the solids-retention portion 150. The solids-retention portion 150 is configured to filter out particulate matter from the fluid passing through the coalescer cartridge 100. The water separation portion 160 is configured to begin the coalescing process by separating water from the fuel in the fluid passing through the coalescer cartridge 100.

The solids-retention portion 150 includes a micro-glass solids retention layer 152. The micro-glass layer 152 is preferably a non-woven glass. Optionally, the layer 152 has a fiber diameter of between about 0.5 and 2 microns. Optionally, the fiber diameter is between 1 and 2 microns. Preferably, the micro-glass layer 152 is a denser media layer than the fiberglass layer 162 described below.

Upstream (in this case radially inside) of the micro-glass layer 152 may be a spun-bonded polyester layer 154. This polyester layer 154 is primarily used to filter larger particulates before reaching the micro-glass layer 152.

The water separation portion 160 includes a fiberglass layer 162 for beginning separation of the water from the fuel passing through the cartridge 100. Preferably, the fiberglass layer 162 is AFS-3 fiberglass(fiberglass with cured phenolic binder). Preferably, the fiberglass layer 162 is a non-woven glass. Optionally, the fiberglass layer 162 has a fiber diameter of between about 0.5 and 2 microns. Optionally, the fiber diameter is between 1 and 2 microns. Preferably, the fiberglass layer 162 includes a more open structure than the micro-glass solids retention layer 152.

Optionally, downstream (in this case, radially outward) of the fiber glass layer 162 is a layer of spun bonded polyester 164. This polyester layer 164 is primarily used to further separate the water from the fuel. Some water droplet growth may begin in this layer.

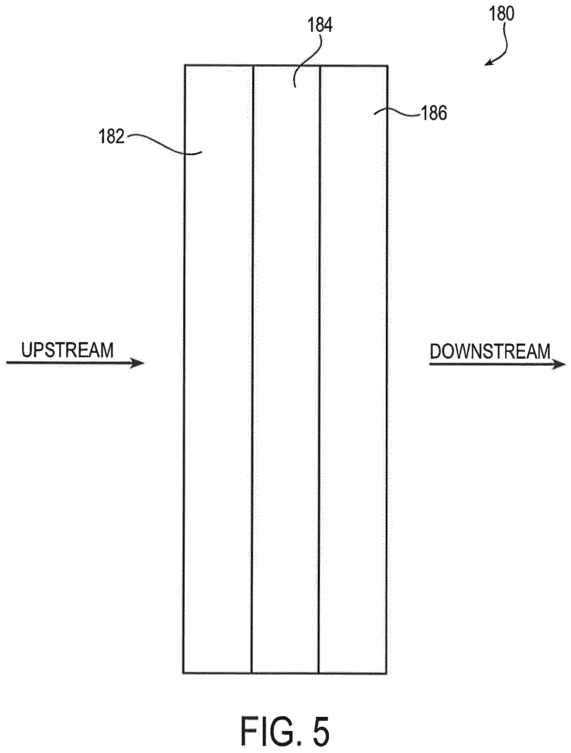

Referring now to FIG. 5, an exemplary wrap filter media portion 180 (wrap portion) is shown in cross-section. The wrap portion may include one, two, three, or more layers. Preferably the wrap portion 180 includes two or three layers. Preferably, the wrap portion 180 includes one or two droplet growth layers 182 and 184 at the upstream side (radially inward in this case) of the wrap portion 180. The one or two droplet growth layers are fine relative to the downstream (radially outward in this case) droplet growth layer 186. For example, the fine layer(s) may be made of fibers having a diameter of between about 0.5 and 2 microns. Optionally, a first fine layer 182 has a fiber diameter of about 0.5 microns. Optionally, a second fine layer 184 has a fiber diameter of about 1-2 microns. Optionally, the downstream droplet growth layer 186 (considered coarse relative to the fine layers) includes fibers having a diameter of approximately 50 microns.

These wrap layers 182, 184, 186 are preferably AFS-3 fiberglass, although other types are possible. Preferably, the wrap layers 182, 184, 186 are cured fiberglass which, although typically more expensive, has been found to improve droplet growth performance.

Preferably, at least one, and more preferably all, of the fiberglass wrap layers are hydrophilic as contrasted with conventional hydrophobic wraps such as a polyester wrap.

Preferably, at least one, and more preferably all, of the fiberglass wrap layers are fully wettable, as contrasted with conventional non-fully wettable wraps such as a polyester wrap.

Preferably, at least one, and more preferably all, of the fiberglass wrap layers are nonwoven as contrasted with conventional precisely woven wraps. The nonwoven nature of exemplary wraps has been found to aid in droplet growth efficiency.

Referring back to FIG. 3, between the pleated portion 140 and the wrap portion 180 may be a perforated center tube 170. The center tube 170 is used to add rigidity to the cartridge, keeping the cartridge from bending and ensuring proper spacing between the end caps. The center tube 170 may be made of any appropriate material known in the art. The center tube 170 is perforated to allow flow from the pleated portion 140 to the wrap portion 180.

Downstream (radially outward in this case) of the wrap portion 180 is a polyester batting 190 layer. Optionally, the polyester batting is a coarser medium than the coarse layer 186 of the wrap portion 180, and is configured to further grow the water droplets.

Downstream of the polyester batting 190 layer is an outer sock 195. Preferably the outer sock is made of woven cotton and is configured to protect the polyester batting during handling of the cartridge before installation and to further grow water droplets and to release the water droplets from the coalescer cartridge outer surface. The outer sock preferably has even larger fiber diameters (coarser) than the polyester batting 190. Optionally, the outer sock may be treated to mitigate microbial growth.

Exemplary coalescers increase flow rate 2-3 times verses conventional products. This increased flow rate through the coalescer allows for increased flow rates on vessel or to provide the same flow rate on smaller filter vessels.

While a particular feature of the invention may have been described above with respect to only one or more of several illustrated embodiments, such feature may be combined with one or more other features of the other embodiments, as may be desired and advantageous for any given or particular application.

## Claims

1. A coalescer cartridge (100) for separating a first fluid from a second fluid comprising:
(a) a pleated filter media portion (140) which is formed from fibres and includes:
(i) a pleated solids retention layer (152) configured to filter particulate matter from the first and second fluid, and
(ii) a fluid separation layer (160, 162) which is co-pleated with the solids retention layer and positioned downstream of the solids retention layer, the fluid separation layer being configured to separate a first fluid from a second fluid, promoting the formation of relatively small droplets of the first fluid suspended in the second fluid,
in which the fluid separation layer includes an open structure relative to the dense structure of the solids retention layer; and
(b) a wrap filter media portion (180) downstream of the pleated media portion including a droplet growth layer (182/184) configured to coalesce the relatively small droplets of the first fluid into relatively larger droplets of the first fluid, in which the wrap filter media portion includes fibres having a diameter greater than the diameter of the fibres of the pleated filter media portion.

2. The coalescer cartridge of claim 1, in which the wrap filter media portion includes first, second, and third droplet growth layers (182, 184, 186).

3. The coalescer cartridge of any preceding claim, in which a first droplet growth layer (182) is upstream of a second droplet growth layer (184) and includes a fine distribution of fibres relative to the second droplet growth layer having a coarse distribution of fibres relative to the first droplet growth layer.

4. The coalescer cartridge of any preceding claim, further comprising a needle polyester wrap (190) downstream of the wrap filter media portion.

5. The coalescer cartridge of any preceding claim, in which the wrap filter media portion comprises non-woven fibreglass.

6. The coalescer cartridge of any preceding claim, in which the pleated filter media portion includes a cellulose or glass filter media.

7. The coalescer cartridge of any preceding claim, in which the solids retention layer includes a micro-glass solids retention layer (152), which is a non-woven glass.

8. The coalescer cartridge of claim 7, in which the micro-glass layer (152) has a fiber diameter of between 0.5 to 2 microns and more preferably between 1 and 2 microns.

9. The coalescer cartridge of any preceding claim, which includes at least one of:
(a) a first endcap (120) having a fluid inlet in fluid communication with a central chamber of the pleated filter media portion defined by an inner layer of filter media, and
(b) a second endcap (130) closing an end of the central chamber of the pleated filter media portion defined by an inner layer of filter media.

10. The coalescer cartridge of any preceding claim, in which the first endcap includes an internal gasket for sealing against a fluid port when installed in a filtration assembly.

11. The coalescer cartridge of any preceding claim, in which the wrap filter media portion (180) includes an upstream droplet growth layer (182) and a downstream droplet growth layer (186), and in which the upstream layer is made of fibres having a diameter of between about 0.5 and 2 microns and the downstream droplet growth layer (186) includes fibres having a diameter of approximately 50 microns.

12. The coalescer cartridge of claim 3, in which the wrap layers (182, 146, 186) are cured fibreglass and at least one or all of the fibreglass wrap layers are hydrophilic and/or fully wettable.

13. The coalescer cartridge of claim 3, in which the wrap layers (182, 146, 186) are cured fibreglass and at least one, optionally all, of the fiberglass wrap layers are nonwoven.

14. A method of filtering a first fluid from a second fluid of a fluid mixture with a coalescer cartridge of any preceding claim, comprising the steps of:
filtering particles from the fluid mixture by passing the fluid mixture through a pleated filter media portion of the coalescer;
separating the first fluid from the second fluid by passing the fluid mixture through a pleated fluid separation layer of the pleated filter media portion of the coalescer, thereby forming relatively small droplets of the first fluid; and
growing the relatively small droplets of the first fluid into relatively large droplets of the first fluid by passing the mixture through a wrap filter media portion downstream of the pleated media portion and thereby coalescing the relatively small droplets into relatively large droplets.

15. A method according to claim 14, wherein the first fluid is water and the second fluid is jet fuel or diesel fuel.

## Patentansprüche

1. Flüssigkeitsabscheider-Patrone (100) zum Trennen eines ersten Fluids von einem zweiten Fluid, umfassend:
a) einen Faltfiltermedienteil (140), der aus Fasern ausgebildet ist und aufweist:
i) eine gefaltete Feststoff-Rückhalteschicht (152), die dazu konfiguriert ist, Teilchen aus dem ersten und zweiten Fluid zu filtern, und
ii) eine Fluidtrennschicht (160, 162), die mit der Feststoff-Rückhalteschicht zusammen gefaltet und der Feststoff-Rückhalteschicht nachgeschaltet angeordnet ist, wobei die Fluidtrennschicht dazu konfiguriert ist, ein erstes Fluid von einem zweiten zu trennen, wobei die Ausbildung relativ kleiner Tröpfchen des ersten Fluids, die in dem zweiten Fluid suspendiert sind, gefördert wird,
wobei die Fluidtrennschicht im Vergleich zu der dichten Struktur der Feststoff-Rückhalteschicht eine offene Struktur aufweist; und
b) einen Wickelfiltermedienteil (180), der dem gefalteten Medienteil nachgeschaltet ist und eine Tröpfchen-Wachstumsschicht (182/184) aufweist, die dazu konfiguriert ist, die relativ kleinen Tröpfchen des ersten Fluids zu relativ größeren Tröpfchen des ersten Fluids zusammenfließen zu lassen, wobei der Wickelfiltermedienteil Fasern enthält, die einen Durchmesser haben, der größer als der Durchmesser der Fasern des Faltfiltermedienteils ist.

2. Flüssigkeitsabscheider-Patrone gemäß Anspruch 1, wobei der Wickelfiltermedienteil eine erste, eine zweite und eine dritte Tröpfchen-Wachstumsschicht (182, 184, 186) aufweist.

3. Flüssigkeitsabscheider-Patrone gemäß einem der vorhergehenden Ansprüche, wobei die erste Tröpfchen-Wachstumsschicht (182) einer zweiten Tröpfchen-Wachstumsschicht (184) vorgeschaltet ist und im Vergleich zu der zweiten Tröpfchen-Wachstumsschicht eine feine Verteilung von Fasern hat, die im Vergleich zu der ersten Tröpfchen-Wachstumsschicht eine grobe Verteilung von Fasern hat.

4. Flüssigkeitsabscheider-Patrone gemäß einem der vorhergehenden Ansprüche, die ferner dem Wickelfiltermedienteil nachgeschaltet eine Nadelpolyesterwickelung (190) umfasst.

5. Flüssigkeitsabscheider-Patrone gemäß einem der vorhergehenden Ansprüche, wobei der Wickelfiltermedienteil ein Glasfaser-Vlies umfasst.

6. Flüssigkeitsabscheider-Patrone gemäß einem der vorhergehenden Ansprüche, wobei der Faltfiltermedienteil ein Zellulose- oder Glasfiltermedium umfasst.

7. Flüssigkeitsabscheider-Patrone gemäß einem der vorhergehenden Ansprüche, wobei die Feststoff-Rückhalteschicht eine Mikro-Glas-Feststoff-Rückhalteschicht (152) umfasst, die ein Glasfaser-Vlies ist.

8. Flüssigkeitsabscheider-Patrone gemäß Anspruch 7, wobei die Mikro-GlasSchicht (152) einen Faserdurchmesser von zwischen 0,5 und 2 µm und vorzugsweise zwischen 1 und 2 µm hat.

9. Flüssigkeitsabscheider-Patrone gemäß einem der vorhergehenden Ansprüche, die mindestens eines aus dem Folgenden aufweist:
a) eine erste Stirnkappe (120), die einen Fluideinlass in Fluidkommunikation mit einer zentralen Kammer des Faltfiltermedienteils hat, die durch eine innere Schicht des Filtermediums definiert ist, und
b) eine zweite Stirnkappe (130), die ein Ende der zentralen Kammer des Faltfiltermedienteils verschließt, die durch eine innere Schicht des Filtermediums definiert ist.

10. Flüssigkeitsabscheider-Patrone gemäß einem der vorhergehenden Ansprüche, wobei die erste Stirnkappe eine innere Dichtung zum Abdichten gegen einen Fluidkanal aufweist, wenn sie in eine Filtrationsanordnung eingebaut ist.

11. Flüssigkeitsabscheider-Patrone gemäß einem der vorhergehenden Ansprüche, wobei der Wickelfiltermedienteil (180) eine vorgeschaltete Tröpfchen-Wachstumsschicht (182) und eine nachgeschaltete Tröpfchen-Wachstumsschicht (186) aufweist und wobei die vorgeschaltete Schicht aus Fasern hergestellt ist, die einen Durchmesser von zwischen 0,5 und 2 µm haben, und die nachgeschaltete Tröpfchen-Wachstumsschicht (186) Fasern aufweist, die einen Durchmesser von ungefähr 50 µm haben.

12. Flüssigkeitsabscheider-Patrone gemäß Anspruch 3, wobei die Wickelschichten (182, 184, 186) ausgehärtete Glasfasern sind und mindestens eine oder alle Glasfaser-Wickelschichten hydrophil und/oder vollständig netzbar sind.

13. Flüssigkeitsabscheider-Patrone gemäß Anspruch 3, wobei die Wickelschichten (182, 184, 186) ausgehärtete Glasfasern sind und mindestens eine, optional alle, Glasfaser-Wickelschichten aus Vliesstoff sind.

14. Verfahren zum Filtern eines ersten Fluids aus einem zweiten Fluid einer Fluidmischung mit einer Flüssigkeitsabscheider-Patrone gemäß einem der vorhergehenden Ansprüche, umfassend die folgenden Schritte:
Filtern von Teilchen aus der Fluidmischung durch Durchlaufen-Lassen der Fluidmischung durch einen Faltfiltermedienteil des Flüssigkeitsabscheiders;
Trennen des ersten Fluids von dem zweiten Fluid durch Durchlaufen-Lassen der Fluidmischung durch die gefaltete Fluidtrennschicht des Faltfiltermedienteils des Flüssigkeitsabscheiders, wodurch relativ kleine Tröpfchen des ersten Fluids gebildet werden; und
Wachsen-Lassen der relativ kleinen Tröpfchen des ersten Fluids in relativ große Tröpfchen des ersten Fluids durch Durchlaufen-Lassen der Mischung durch einen Wickelfiltermedienteil dem Faltfiltermedienteil nachgeschaltet und dadurch Zusammenfließen-Lassen der relativ kleinen Tröpfchen zu relativ großen Tröpfchen.

15. Verfahren gemäß Anspruch 14, wobei das erste Fluid Wasser und das zweite Fluid Kerosin oder Diesel-Kraftstoff ist.

## Revendications

1. Cartouche de coalesceur (100) pour séparer un premier fluide d'un deuxième fluide comprenant :
(a) une partie de milieu filtrant plissée (140) qui est formée de fibres et comporte :
(i) une couche de rétention de solides plissée (152) configurée pour filtrer une matière particulaire provenant des premier et deuxième fluides, et
(ii) une couche de séparation de fluide (160, 162) qui est plissée conjointement avec la couche de rétention de solides et positionnée en aval de la couche de rétention de solides, la couche de séparation de fluide étant configurée pour séparer un premier fluide d'un deuxième fluide, favorisant la formation de gouttelettes relativement petites du premier fluide en suspension dans le deuxième fluide,
dans laquelle la couche de séparation de fluide comporte une structure ouverte par rapport à la structure dense de la couche de rétention de solides ; et
(b) une partie de milieu filtrant enroulée (180) en aval de la partie de milieu plissée comportant une couche de croissance de gouttelettes (182/184) configurée pour faire coalescer les gouttelettes relativement petites du premier fluide en des gouttelettes relativement plus grosses du premier fluide, où la partie de milieu filtrant enroulée comporte des fibres ayant un diamètre supérieur au diamètre des fibres de la partie de milieu filtrant plissée.

2. Cartouche de coalesceur de la revendication 1, dans laquelle la partie de milieu filtrant enroulée comporte des première, deuxième et troisième couches de croissance de gouttelettes (182, 184, 186).

3. Cartouche de coalesceur de l'une des revendications précédentes, dans laquelle une première couche de croissance de gouttelettes (182) est en amont d'une deuxième couche de croissance de gouttelettes (184) et comporte une distribution fine de fibres par rapport à la deuxième couche de croissance de gouttelettes ayant une distribution grossière de fibres par rapport à la première couche de croissance de gouttelettes.

4. Cartouche de coalesceur de l'une des revendications précédentes, comprenant en outre une enveloppe en polyester d'aiguille (190) en aval de la partie de milieu filtrant enroulée.

5. Cartouche de coalesceur de l'une des revendications précédentes, dans laquelle la partie de milieu filtrant enroulée comprend une fibre de verre non tissée.

6. Cartouche de coalesceur de l'une des revendications précédentes, dans laquelle la partie de milieu filtrant plissée comporte un milieu filtrant en cellulose ou en verre.

7. Cartouche de coalesceur de l'une des revendications précédentes, dans laquelle la couche de rétention de solides comporte une couche de rétention de solides en verre pour couvre-objet (152), qui est un verre non tissé.

8. Cartouche de coalesceur de la revendication 7, dans laquelle la couche en verre pour couvre-objet (152) a un diamètre de fibre compris entre 0,5 et 2 microns et plus préférablement entre 1 et 2 microns.

9. Cartouche de coalesceur de l'une des revendications précédentes, qui comporte au moins l'un :
(a) d'un premier bouchon d'extrémité (120) ayant une entrée de fluide en communication fluidique avec une chambre centrale de la partie de milieu filtrant plissée définie par une couche intérieure de milieu filtrant, et
(b) d'un deuxième bouchon d'extrémité (130) fermant une extrémité de la chambre centrale de la partie de milieu filtrant plissée définie par une couche intérieure de milieu filtrant.

10. Cartouche de coalesceur de l'une des revendications précédentes, dans laquelle le premier bouchon d'extrémité comporte un joint d'étanchéité interne pour assurer l'étanchéité contre un orifice de fluide lorsqu'il est installé dans un ensemble de filtration.

11. Cartouche de coalesceur de l'une des revendications précédentes, dans laquelle la partie de milieu filtrant enroulée (180) comporte une couche amont de croissance de gouttelettes (182) et une couche aval de croissance de gouttelettes (186), et dans laquelle la couche amont est constituée de fibres ayant un diamètre compris entre environ 0,5 et 2 microns et la couche aval de croissance de gouttelettes (186) comporte des fibres ayant un diamètre d'environ 50 microns.

12. Cartouche de coalesceur de la revendication 3, dans laquelle les couches d'enveloppe (182, 146, 186) sont en fibres de verre durcies et au moins l'une ou la totalité des couches d'enveloppe en fibres de verre est hydrophile et/ou complètement mouillable.

13. Cartouche de coalesceur de la revendication 3, dans laquelle les couches d'enveloppe (182, 146, 186) sont en fibres de verre durcies et au moins l'une, éventuellement la totalité, des couches d'enveloppe en fibres de verre est non tissée.

14. Procédé de filtration d'un premier fluide d'un deuxième fluide d'un mélange fluidique avec une cartouche de coalesceur de l'une des revendications précédentes, comprenant les étapes consistant :
à filtrer des particules du mélange fluidique en faisant passer le mélange fluidique à travers une partie de milieu filtrant plissée du coalesceur ;
à séparer le premier fluide du deuxième fluide en faisant passer le mélange fluidique à travers une couche de séparation de fluide plissée de la partie de milieu filtrant plissée du coalesceur, formant ainsi des gouttelettes relativement petites du premier fluide ; et
à faire croître les gouttelettes relativement petites du premier fluide en des gouttelettes relativement grosses du premier fluide en faisant passer le mélange à travers une partie de milieu filtrant enroulée en aval de la partie de milieu plissée et faisant ainsi coalescer les gouttelettes relativement petites en des gouttelettes relativement grosses.

15. Procédé selon la revendication 14, dans lequel le premier fluide est de l'eau et le deuxième fluide est du carburéacteur ou du carburant diesel.
